# FASCICULE DE BREVET EUROPEEN

(11) **EP 0 690 217 B1**
(45) Date de publication et mention de la délivrance du brevet: **11.11.1998**
(21) Numéro de dépôt: 95401537.6
(22) Date de dépôt: 28.06.1995
(51) Int. Cl.: F02K 1/68

(54) **Inverseur de poussée de turboréacteur à double flux à obstacles lies au capot primaire**
Schubumkehrvorrichtung für ein Zweikreistriebwerk mit Klappen am Triebwerksgehäuse
Double flux turbine thrust reverser with blocker flaps connected to the engine cowling

(30) Priorité: 30.06.1994 FR 9408056
(43) Date de publication de la demande: 03.01.1996
(73) Titulaire: Hispano-Suiza Aerostructures, 75015 Paris (FR)
(72) Inventeur: Jean, Michel Christian Marie, F-76700 Harfleur (FR)
(74) Mandataire: Berrou, Paul

(56) Documents cités:
- FR-A- 2 625 261
- FR-A- 2 650 861
- US-A- 3 280 561
- US-A- 4 216 923

## Description

La présente invention concerne un inverseur de poussée de turboréacteur à double flux.

Dans ce type de turboréacteur comprenant un canal primaire de circulation des gaz dits de flux chaud constituant une veine d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la déviation du flux secondaire froid.

Il est connu dans ces applications d'utiliser des éléments déplaçables ou obstacles susceptibles en position déployée de former un ensemble annulaire qui obture ledit canal secondaire de manière à dévier le flux secondaire, en procurant une inversion de poussée. Lors du fonctionnement en poussée directe, par contre, lesdits obstacles doivent être rétractés et escamotés pour dégager la circulation du flux secondaire dans le canal secondaire. Dans certains types connus d'inverseurs de poussée, lesdits obstacles sont ainsi escamotés dans la paroi radialement externe du canal secondaire.

D'autres solutions, notamment applicables lorsque les taux de dilution sont élevés, et lorsque la paroi radialement externe du canal secondaire est plus courte que la paroi radialement interne dudit canal secondaire, prévoient d'escamoter lesdits obstacles au niveau de la paroi radialement interne du canal secondaire. Cette solution permet d'éviter d'augmenter l'encombrement (diamètre extérieur) du moteur, d'obtenir une efficacité assurant les performances requises d'inversion, d'assurer également, en fonctionnement de poussée directe, une paroi interne aérodynamiquement continue sans introduire de perturbations dommageables dans les écoulements tout en obtenant une masse réduite de l'ensemble et une simplicité facilitant la réalisation et la maintenance.

US-A-3 280 561 et FR-A-2 625 261 décrivent des solutions de ce type. Les éléments déplaçables ou obstacles sont dans ce cas montés sur la structure fixe entourant la génératrice de gaz du moteur au moyen de pivots fixes. L'articulation de pivotement des obstacles peut être placée du côté aval mais dans ce cas, le déplacement de l'obstacle amène une position d'obstruction du canal secondaire gênante pour le fonctionnement du moteur. Des problèmes de sécurité subsistent du fait que les obstacles ne sont pas auto-fermants. Dans le cas où l'articulation est placée du côté amont, la déviation du jet est obtenue par la face externe des obstacles, ce qui ne permet pas une optimisation de formes adaptée à la fois à la déviation et au jet direct. Un autre inconvénient majeur dans ce cas tient à la nécessité de prévoir un becquet ou déflecteur escamotable à l'extrémité d'obstacle qui doit être assez développé pour assurer l'efficacité et est soumis à des efforts importants.

Un inverseur de poussée de turboréacteur à double flux conforme à l'invention et permettant d'obtenir les résultats rappelés ci-dessus sans encourir les inconvénients des solutions connues antérieures est caractérisé en ce que chaque élément déplaçable est maintenu dans la position de jet direct et est guidé lors des déplacements et lors du fonctionnement en inversion de poussée par deux bielles avant et par deux bielles arrière formant une cinématique de type parallélogramme déformable, lesdites bielles ayant une extrémité articulée sur ledit élément déplaçable et l'autre extrémité articulée sur la structure fixe de capot primaire.

D'autres caractéristiques et avantages de l'invention seront mieux compris à la lecture de la description qui va suivre d'un mode de réalisation de l'invention, en référence aux dessins annexés sur lesquels :
- la figure 1 montre, selon une vue schématique en perspective, un turboréacteur à double flux associé à un inverseur de poussée conforme à l'invention et représenté dans une configuration d'inversion de poussée ;
- la figure 2 montre, selon une vue partielle analogue à celle de la figure 1, une partie écorchée représentant la réalisation détaillée du système de commande de l'inverseur de poussée représenté sur la figure 1 ;
- la figure 3 représente le turboréacteur et l'inverseur de poussée de la figure 1 selon une vue schématique à partir de l'avant du turboréacteur ;
- la figure 4 représente, selon une demi vue schématique partielle en section par un plan passant par l'axe longitudinal du turboréacteur et de l'inverseur de poussée et par le milieu de l'élément déplaçable suivant la ligne IV-IV de la figure 3, l'inverseur de poussée des figures 1 à 3, dans une configuration de jet direct et en traits fins dans une configuration d'inversion de poussée ;
- la figure 5 représente, selon une vue en section par un plan transversal suivant la ligne V-V de la figure 4, l'inverseur de poussée des figures 1 à 4 ;
- la figure 6 représente, selon une vue en section par un plan transversal suivant la ligne VI-VI de la figure 4, l'inverseur de poussée des figures 1 à 5 ;
- la figure 7 représente, selon une vue en section par un plan transversal suivant la ligne VII-VII de la figure 4, l'inverseur de poussée des figures 1 à 6 ;
- la figure 8 représente, selon une demi-vue schématique partielle analogue à celle de la figure 4, une variante de l'inverseur de poussée des figures 1 à 7 dans une configuration intermédiaire entre le jet direct et l'inversion de pousssée.
- la figure 9 représente selon une demi-vue schématique analogue à celle de la figure 4 l'inverseur de poussée représenté sur la figure 8 dans une configuration de jet direct.

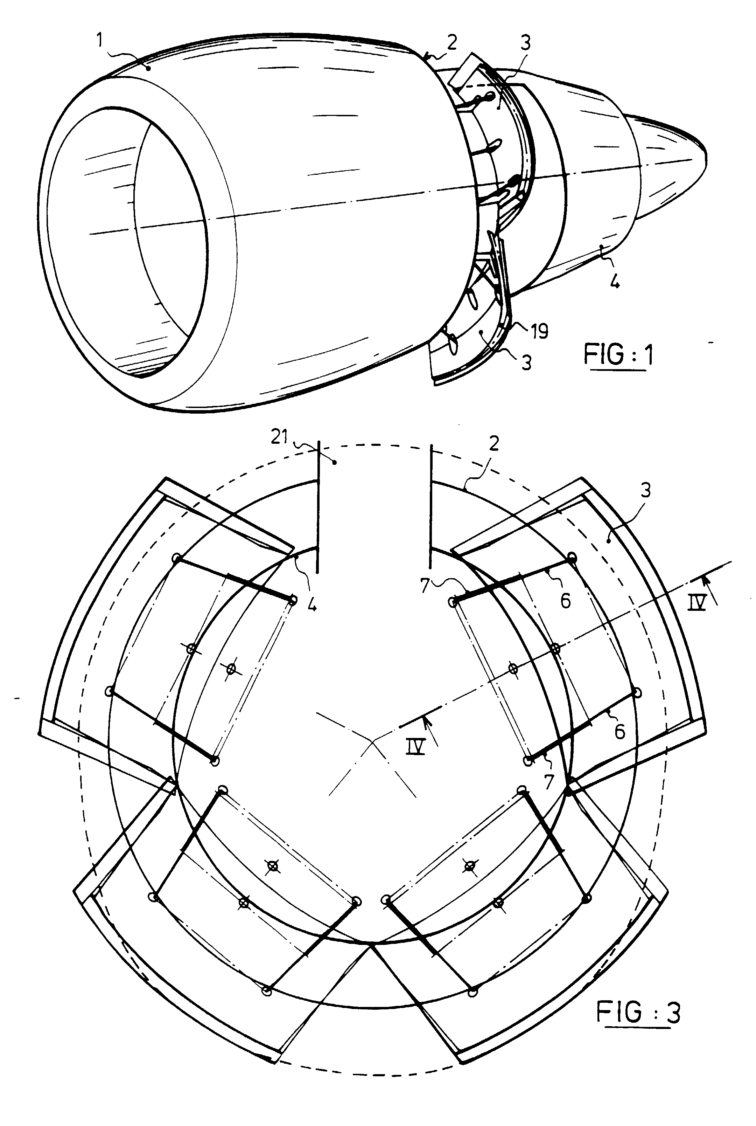

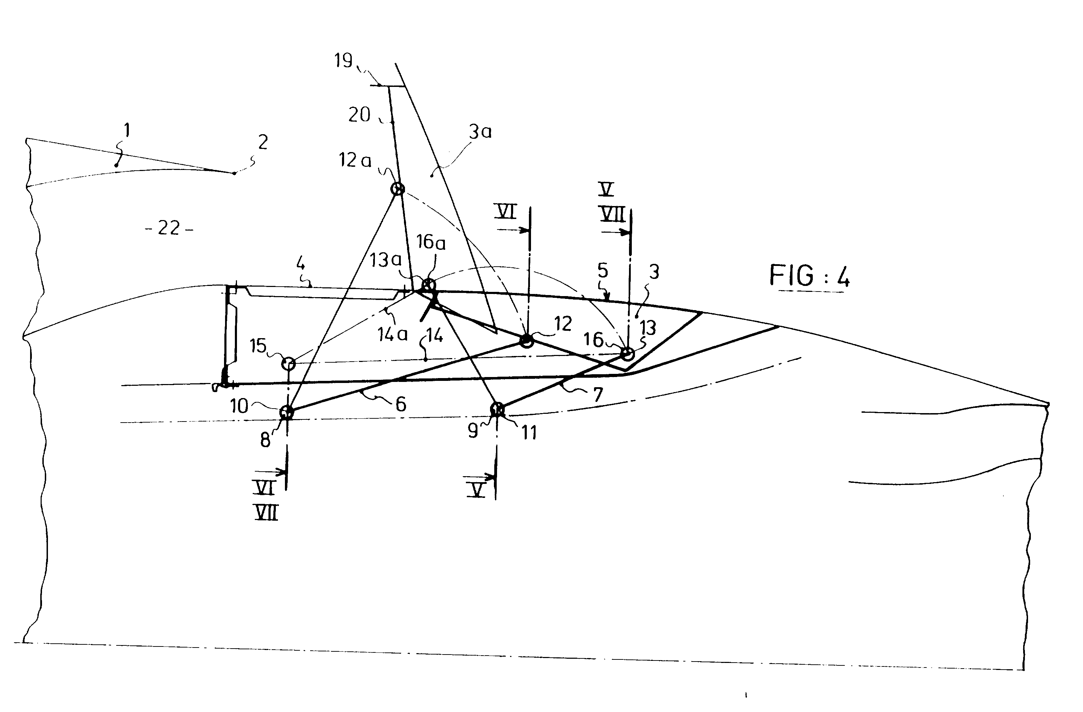

La figure 1 montre un exemple de turboréacteur à double flux d'un type à flux séparés dans lequel la paroi extérieure 1 du canal 22 de flux secondaire dont l'extrémité aval 2 constitue le bord de fuite de la tuyère de soufflante est courte et correspond à une solution de montage sur avion dite à nacelle courte. De ce fait, cette définition n'est pas adaptée à l'installation d'un inverseur de poussée comportant des grilles ou des portes intégrées dans la paroi extérieure du canal de flux secondaire. Un inverseur de poussée conforme à l'invention est installé en conséquence, comme schématiquement représenté sur la figure 1, en aval dudit canal 22 de flux secondaire, au-delà dudit bord de fuite 2 et comporte des éléments déplaçables ou obstacles 3, montés sur le capot primaire 4 du turboréacteur et susceptibles, dans la position déployée représentée sur la figure 1, de dévier vers l'avant le flux secondaire, de manière à créer une inversion de poussée ou contre-poussée. Dans le mode de réalisation représenté sur les figures, les obstacles ou éléments déplaçables 3 sont au nombre de quatre mais suivant les applications un nombre différent d'obstacles peut être prévu. Chaque obstacle 3 comporte un panneau principal 5 dont la surface radialement externe, dans la position rétractée correspondant au fonctionnement en jet direct telle que représentée sur la figure 4, se raccorde sur ses bords avec la surface du capot primaire 4 du turboréacteur, évitant ainsi notamment toute perturbation aérodynamique du flux secondaire sortant du canal secondaire 22.

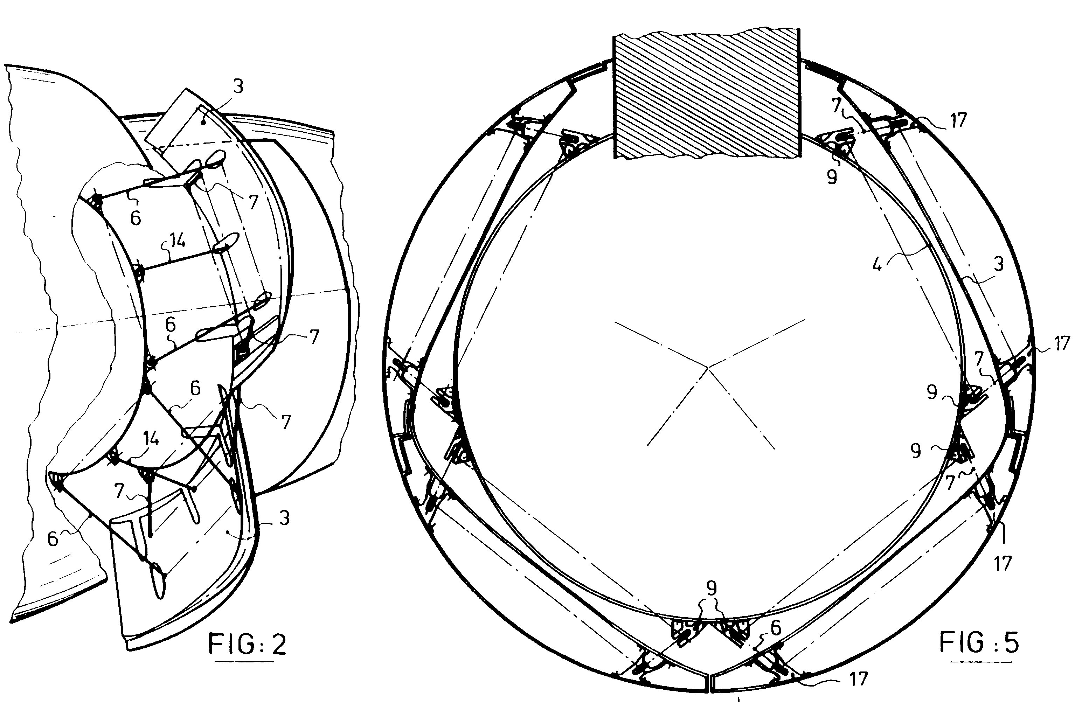

Les figures 2 à 7 montrent les particularités remarquables de réalisation du système de commande des déplacements des obstacles 3 de l'inverseur de poussée, conformément à l'invention. Dans l'exemple représenté, chaque obstacle ou élément déplaçable 3 de l'inverseur est maintenu en place dans la position de jet direct ou est guidé lors des déplacements et lors du fonctionnement en inversion de poussée, d'une part, au moyen de deux bielles avant 6 et d'autre part, au moyen de deux bielles arrière 7.

La structure fixe du capot primaire 4 du turboréacteur porte des articulations fixes 8 et 9 sur lesquelles sont articulées respectivement les extrémités 10 et 11 desdites bielles 6 et 7. Les autres extrémités 12 et 13 respectivement des bielles 6 et 7 sont articulées au niveau de l'élément déplaçable 3. Un vérin 14 est également fixé de manière articulée sur ladite structure fixe de capot primaire 4 en 15 et l'extrémité 16 de la tige dudit vérin 14 est reliée de manière articulée à l'élément déplaçable 3. La figure 4 montre les deux positions extrêmes des articulations déplaçables passant de la configuration de jet direct en 12, 13 et 16 à la configuration d'inversion de poussée en 12a, 13a, 16a, l'obstacle ayant la position représentée en 3a dans ce cas et le vérin la position 14a.

Dans l'exemple représenté sur la figure 4, le pivot fixe 15 du vérin 14 de commande d'obstacle est disposé en amont dudit obstacle 3 et dans la configuration de jet direct, le vérin 14 est placé en partie en-dessous de l'obstacle 3.

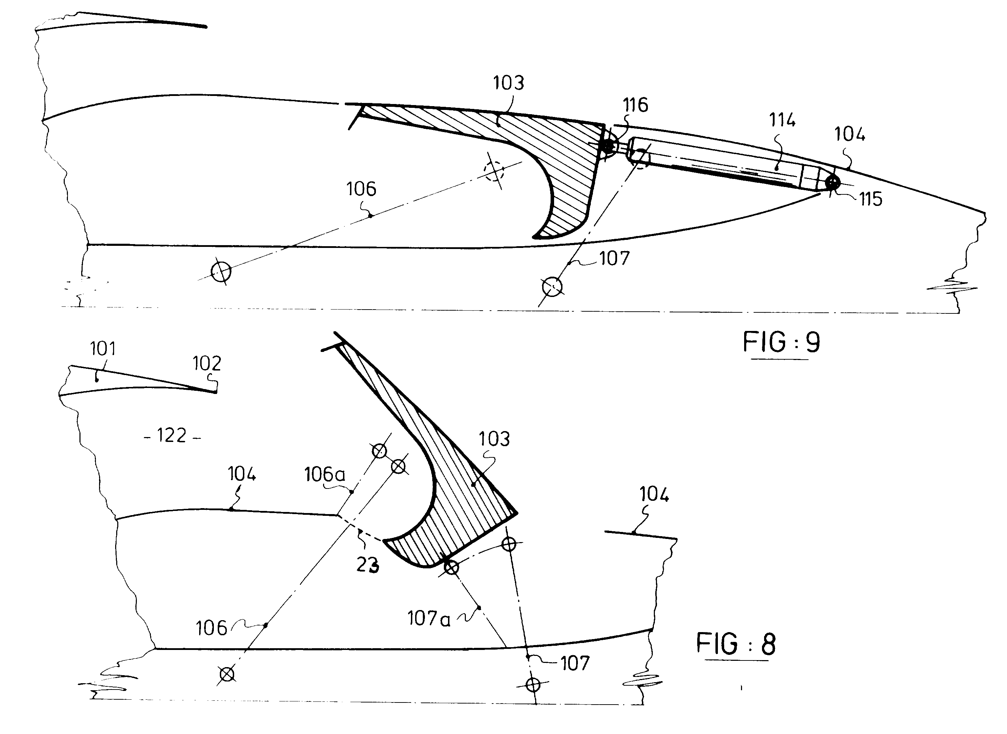

La disposition adoptée dans ce cas montre que le vérin ne crée pas de perturbation dans le flux lors du fonctionnement en inversion de poussée, car dans la position 14a, il n'y a pas d'interférence, comme cela apparait sur la figure 4. D'autres dispositions peuvent cependant être adoptées. Notamment le pivot d'articulation du vérin sur la structure fixe peut être placé en aval de l'obstacle. La figure 9 montre un tel exemple de réalisation montrant un vérin de commande 114 disposé en aval de l'obstacle 103 et ses articulations 115 sur la structure fixe du capot primaire 104 et 116 sur l'obstacle 103 ainsi que la disposition correspondante des bielles avant 106 et des bielles arrière 107.

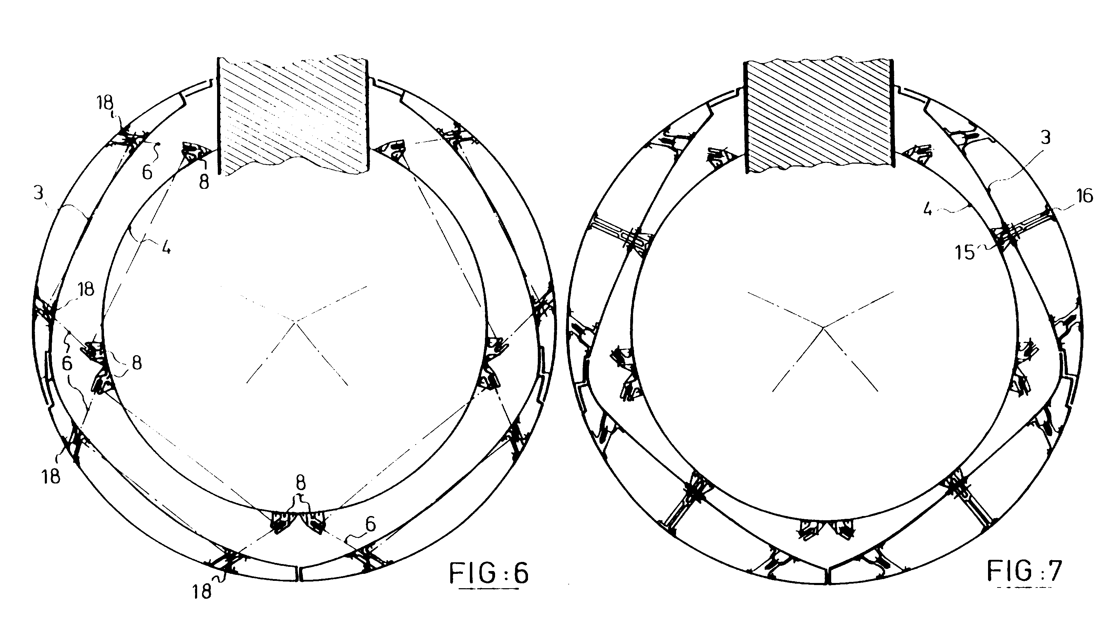

La figure 5 montre pour l'exemple de réalisation représentée sur les figures 1 à 4 les détails de réalisation de supports d'articulations fixes 9 des bielles arrières 7, fixées sur la structure fixe de capot primaire 4 et des articulations 17 solidaires de l'obstacle 3. De manière analogue, les supports d'articulations fixes 8 des bielles avant 6, fixées sur la structure fixe de capot primaire 4 et les articulations 18 solidaires de l'obstacle 3 sont représentées sur la figure 6. De même, la figure 7 montre les supports d'articulation 15 sur la structure fixe de capot primaire et 16 sur l'obstacle 3, correspondant au vérin de commande 14.

La structure fixe de capot primaire 4 peut être constituée, de manière connue en soi, par deux demi-structures qui peuvent être articulées au niveau de leur fixation sur le mât 21 de montage sur l'avion, schématisé sur les figures 3 et 5 à 7, et ouvrantes à l'opposé, la fermeture étant assurée par un système de verrouillage, connu en soi et qui n'a pas été représenté sur les dessins.

De manière connue en soi, chaque obstacle 3 est muni à son extrémité d'un déflecteur 19 ainsi que d'une paroi interne 20 à profil optimisé, de manière à assurer les performances recherchées lors du fonctionnement en inversion de poussée.

Les conditions de fonctionnement correspondant au jet direct d'une part et à l'inversion de poussée d'autre part ressortent suffisamment de la description de l'inversion de poussée qui a été faite en référence aux figures 1 à 7 et ne seront pas détaillées davantage. On note toutefois un avantage important résultant des dispositions remarquables de l'invention concernant le montage des obstacles ou éléments déplaçable 3 au moyen des bielles avant 6 et arrière 7. En effet, durant la période de transit, lors du passage du fonctionnement en jet direct au fonctionnement en inversion de poussée, les obstacles 3 commencent par se soulever de la structure fixe 4, en ménageant un passage sous lesdits obstacles 3, entre les obstacles 3 et la structure fixe 4. Une obstruction excessive du passage du flux secondaire qui entrainerait des phénomènes de pompage du turboréacteur est ainsi évitée. L'exemple de réalisation représenté sur la figure 8 montre ainsi l'espace 23 créé avant que l'obstacle 103 n'atteigne sa position de fin de course et permettant un passage de flux alors que les bielles avant 106 arrivent à leur point mort en 106a, tandis que les bielles arrière 107 continuent le déplacement de l'obstacle 103 pour venir fermer l'espace 23 créé entre la structure fixe 104 et la face interne de l'obstacle 103 lorsque l'obstacle 103 prend sa position d'inversion de poussée en laissant un espace suffisant entre sa face interne et le bord de fuite 102 de la paroi extérieure 101 du canal de flux secondaire 122.

L'invention permet également de conserver un système de commande simple. En outre, la position adoptée pour les biellettes de maintien des obstacles est telle que les obstacles sont auto-fermants et tendent à se refermer en cas d'une ouverture intempestive.

Par ailleurs, une optimisation du pilotage des nappes du flux inversé est obtenue en adaptant la cinématique de chaque obstacle, différente de l'un à l'autre, pour obtenir les résultats recherchés. Ce résultat est par exemple obtenu grâce à des longueurs de bielles différentes.

## Revendications

1. Inverseur de poussée de turboréacteur à double flux comportant des éléments déplaçables (3; 103 susceptibles, en position déployée, de constituer des obstacles (3; 103) formant un ensemble annulaire de déviation du flux secondaire procurant une inversion de poussée et en position rétractée, correspondant à un fonctionnement en poussée directe du turboréacteur, de s'intégrer dans la paroi de capot primaire (4; 104) du turboréacteur, en aval du canal annulaire (22; 122) d'ejection dudit flux secondaire, chaque élément déplaçable (3; 103) étant associé à au moins un vérin (14; 114) de commande des déplacements, fixé de manière articulée sur la structure fixe de capot primaire (4; 104) caractérisé en ce que chaque élément déplaçable (3; 103) est maintenu dans la position de jet direct et est guidé lors des déplacements et lors du fonctionnement en inversion de poussée par deux bielles avant (6; 106) et par deux bielles arrière (7;107) formant une cinématique de type parallélogramme déformable, lesdites bielles (6,7; 106,107) ayant une extrémité (12, 13) articulée sur ledit élément déplaçable (3; 103) et l'autre extrémité (10, 11) articulée sur la structure fixe de capot primaire (4; 104).

2. Inverseur de poussée de turboréacteur à double flux selon la revendication 1 dans lequel ledit vérin (14; 114) de commande, la position des articulations (10,11,12,13) de bielle et les longueurs des bielles (6,7; 106, 107) sont disposées de manière que durant la période de transit entre la configuration de jet direct et la configuration d'inversion de poussée, un espace (23) est ouvert entre la face interne de l'obstacle (3 ; 103) et la structure fixe de capot primaire (4; 104), ménageant un passage d'une partie du flux éjecté par le canal secondaire (22; 122).

3. Inverseur de poussée de turboréacteur à double flux selon l'une des revendications 1 ou 2 dans lequel les obstacles (3, 103), les vérins de commande (14; 114) et les bielles (6,7 ; 106, 107) de maintien et guidage des obstacles sont montés sur deux demi-structures fixes de capot primaire, chacune susceptible d'être ouverte au moyen d'une articulation la reliant au mât (21) de montage sur l'avion.

4. Inverseur de poussée de turboréacteur à double flux selon l'une des revendications 1 à 3 dans lequel une disposition et des longueurs de bielles (6, 7 ; 106, 107) différentes d'un obstacle (3; 103) à l'autre permettent d'obtenir un pilotage optimisé des nappes du flux inversé lors du fonctionnement en inversion de poussée.

## Patentansprüche

1. Schubumkehrvorrichtung für ein Zweikreisturbotriebwerk mit bewegbaren Elementen (3; 103), die Klappen (3; 103) bilden können, die in ausgeklappter Stellung eine ringförmige Gesamtanordnung zur Umlenkung des Mantelstroms bilden, wodurch eine Schubumkehr bewirkt wird, und sich bei eingezogener Stellung, die dem Direktschub-Betrieb des Turbotriebwerks entspricht, stromabwärts von dem Ringkanal (22; 122) für den Ausstoß des genannten Mantelstroms in die Wand des Turbotriebwerkgehäuses (4; 104) einfügen, wobei jedes bewegbare Element (3; 103) mit mindestens einem Zylinder (14; 114) zur Steuerung der Bewegungen verbunden ist, der gelenkig an dem feststehenden Gehäuseaufbau (4; 104) befestigt ist,
dadurch gekennzeichnet, daß jedes bewegbare Element (3; 103) in der dem Direktstrahl entsprechenden Stellung gehalten wird und bei Klappbewegungen und beim Schubumkehrbetrieb durch zwei vordere Stangen (6; 106) und durch zwei hintere Stangen (7; 107) geführt wird, die die Kinematik eines verformbaren Parallelogramms aufweisen, wobei die genannten Stangen (6, 7; 106, 107) mit einem Ende (12, 13) an dem genannten bewegbaren Element (3; 103) angelenkt sind und mit dem anderen Ende (10, 11) an dem feststehenden Triebwerkgehäuse-Aufbau (4; 104) angelenkt sind.

2. Schubumkehrvorrichtung für ein Zweikreisturbotriebwerk nach Anspruch 1, bei der der genannte Steuerzylinder (14; 114), die Stellung der Stangengelenke (10, 11, 12, 13) und die Längen der Stangen (6, 7; 106, 107) dergestalt angeordnet sind, daß während der Übergangsphase von der Direktstrahl-Konfiguration zu der Schubumkehr-Konfiguration zwischen der Innenseite der Klappe (3; 103) und dem feststehenden Gehäuseaufbau (4; 104) ein Zwischenraum (23) besteht, der für einen Teil des durch den Mantelstromkanal (22; 122) ausgestoßenen Stroms einen Durchlaß bildet.

3. Schubumkehrvorrichtung für ein Zweikreisturbotriebwerk nach einem der Ansprüche 1 oder 2, bei der die Klappen (3; 103), die Steuerzylinder (14; 114) und die Stangen (6, 7; 106, 107) zum Halten und Führen der Klappen an zwei feststehenden Gehäusehälften angebracht sind, die jeweils mittels eines Gelenks geöffnet werden können, das sie mit dem Stiel (21) verbindet, mit dem sie am Flugzeug angebracht sind.

4. Schubumkehrvorrichtung für ein Zweikreisturbotriebwerk nach einem der Ansprüche 1 bis 3, bei der durch eine bei den einzelnen Klappen (3; 103) unterschiedliche Anordnung und Längen der Stangen (6, 7; 106, 107) im Schubumkehr-Betrieb ein optimales Steuern der Umkehrstrom-Flächen erreicht werden kann.

## Claims

1. A thrust reverser for a bypass turbojet engine comprising displaceable elements (3; 103) adapted when in a deployed position to form barriers (3; 103) forming an annular assembly for diverting the bypass flow to produce a thrust reversal and, when in a retracted position corresponding to forward thrust operation of the engine, to be incorporated in the wall of the primary casing (4; 104) of the engine downstream of the annular bypass flow exhaust channel (22; 122), each displaceable element (3; 103) being associated with at least one actuator jack (14; 114) pivotally connected to the fixed structure of the primary casing (4; 104),
characterised in that each displaceable element (3; 103) is retained in the forward thrust position and is guided during displacement and thrust reversal operation by two front rods (6; 106) and two rear rods (7; 107) which form a deformable parallelogram type linkage, the rods (6,7; 106, 107) having one end (12, 13) pivotally connected to the displaceable element (3; 103) and the other end (10,11) pivotally connected to the fixed primary casing structure (4; 104).

2. A thrust reverser according to claim 1 wherein the jack (14; 114), the position of the rod pivots (10, 11, 12, 13) and rod lengths are such that during the periods of displacement between the forward thrust configuration and the reverse thrust configuration a space (23) opens between the inner surface of the barrier (3; 103) and the fixed primary casing structure (4; 104) to leave a passage for some of the flow discharged by the bypass channel (22; 122),

3. A thrust reverser according to claim 1 or claim 2 wherein the barriers (3; 103), the jacks (14; 114) and the rods (6,7; 106, 107) for retaining and guiding the barriers nare mounted on two fixed primary casing half-structures each openable by means of an articulation connecting it to the engine mounting pylon (21).

4. A thrust reverser according to any of claims 1 to 3 wherein the arrangement and lengths of the rods (6, 7; 106, 107) are different for each barrier (3; 103) to optimise control of the layers of reversed flow in thrust reversal operation.
